# EUROPÄISCHE PATENTANMELDUNG

(11) **EP 2 236 851 A1**
(43) Veröffentlichungstag der Anmeldung: **06.10.2010**
(21) Anmeldenummer: 09004675.6
(22) Anmeldetag: 31.03.2009
(51) Int. Cl.: F16D 69/00, F16D 13/68

(54) **Kupplungsbelag**

(71) Anmelder: Carl Freudenberg KG, 69469 Weinheim (DE)
(72) Erfinder: Kritzer, Peter, Dr., 67147 Forst (DE); Klenk, Thomas, Dr., 69221 Dossenheim (DE)

(57) **Zusammenfassung**

Eine Kupplungsscheibe (1), umfassend eine Trägerstruktur (2) auf der ein Kupplungsbelag (3) angeordnet ist, wobei der Kupplungsbelag (3) zumindest eine poröse erste Schicht (4) umfasst, ist im Hinblick auf die Aufgabe, eine Kupplungsscheibe zu entwickeln, die insbesondere für Nasskupplungen geeignet ist und über eine lange Gebrauchsdauer elastische Eigenschaften aufweist, **dadurch gekennzeichnet, dass** die erste Schicht (4) auf zumindest einer zweiten Schicht (5), gebildet aus elastomerem Material, angeordnet ist.

## Beschreibung

### Technisches Gebiet

Die Erfindung betrifft eine Kupplungsscheibe, umfassend eine Trägerstruktur auf der ein Kupplungsbelag angeordnet ist, wobei der Kupplungsbelag zumindest eine poröse erste Schicht umfasst.

### Stand der Technik

Kupplungen, insbesondere für Schaltgetriebe, bestehen aus einer Kupplungsscheibe, die durch eine Druckplatte an eine Schwungscheibe angedrückt wird. Durch eine Ausrückvorrichtung kann die Druckplatte von der Kupplungsscheibe und diese wiederum von der Schwungscheibe getrennt werden. Der Kraftschluss zwischen Schwungscheibe, Druckplatte und der dazwischen angeordneten Kupplungsscheibe ist getrennt. Dabei soll die Kupplungsscheibe einen möglichst hohen Reibwert aufweisen, um eine vollständige schlupffreie Kraftübertragung zu ermöglichen. Dazu ist die Kupplungsscheibe mit einem Belag versehen, der auf den metallischen Träger der Kupplungsscheibe aufgeklebt ist. Dieser Belag besteht aus einem papierartigen Fasermaterial, beispielsweise aus Aramid- oder Cellulosefasern, sowie mineralischen Füllstoffen, die durch einen Binder, beispielsweise ein Phenolharz, gebunden sind. Die so hergestellten Kupplungsbeläge sind kostengünstig weisen aber den Nachteil auf, dass die Elastizität dieser Beläge begrenzt ist und nur auf der Porosität des Fasermaterials beruht. Diese lässt während der Gebrauchsdauer nach. Eine gewisse Elastizität des Kupplungsbelages ist jedoch hinsichtlich des Kupplungskomforts notwendig, um beispielsweise ein Rupfen der Kupplung zu vermeiden. Moderne Motoren sind häufig mit automatischen Kupplungen ausgestaltet, die häufig als Nasskupplung ausgebildet sind. Hier ist insbesondere nachteilig, dass der Binder des Kupplungsbelages möglicherweise nicht medienbeständig gegenüber dem in der Nasskupplung eingesetzten Getriebeöl ist.

Ein weiterer Nachteil der bestehenden Papiere beruht auf der geringen Länge der verwendeten Fasern bzw. des häufig verwendeten Pulp-Materials. Kurze Fasern unterliegen einem erhöhten Risiko mechanischer Herauslösung aus dem Kupplungsbelag. Die herausgelösten Fasern können sich im Getriebeöl ansammeln und dieses kontaminieren bzw. Getriebeölfilter verstopfen. Des Weiteren kann die Loslösung von Mineralpartikeln zur Kontamination des Getriebeöls bzw. zu einer Abrasion an bewegten Teilen führen.

### Darstellung der Erfindung

Der Erfindung liegt daher die Aufgabe zugrunde, eine Kupplungsscheibe zu entwickeln, die insbesondere für Nasskupplungen geeignet ist und über eine lange Gebrauchsdauer elastische Eigenschaften aufweist.

Diese Aufgabe wird mit den Merkmalen des Patentanspruchs 1 gelöst. Auf vorteilhafte Ausgestaltungen nehmen die Unteransprüche Bezug.

Zur Lösung der Aufgabe ist die erste Schicht auf zumindest einer zweiten Schicht, gebildet aus elastomerem Material, angeordnet. Bei der erfindungsgemäßen Ausgestaltung der Kupplungsscheibe erfolgt eine Funktionstrennung, bei der die Funktionen sichere Kraftübertragung und Komfort getrennt sind. Die Funktion der hohen Reibung und damit der sicheren Kraftübertragung wird durch die erste poröse Schicht übernommen. Diese ist mit einem ausschließlich für diese Funktion optimierten Material versehen. Die weitere Funktion des Komforts und der dafür notwendigen Elastizität wird durch die zweite Schicht, die aus einem elastomeren Material besteht, übernommen. Das Material der zweiten Schicht kann ebenfalls aufgrund der Funktionstrennung auf die Funktion Komfort abgestimmt sein. Elastomere Werkstoffe sind aufgrund deren Elastizität besonders geeignet. Die zweite Schicht bildet zudem eine Trägerschicht für die erste Schicht, wodurch gegebenenfalls Bindemittel entfallen können, die das Material der ersten porösen Schicht binden. Die Funktion des Bindens des Materials der ersten Schicht kann ebenfalls durch das Material der zweiten Schicht erfolgen. Denkbare Werkstoffe für die zweite Schicht sind insbesondere spritzgießfähige elastomere Werkstoffe. Als besonders vorteilhaft für die Kupplungsbeläge haben sich Acrylat-Kautschuk (ACM), Ethylen-Acrylat-Kautschuk (AEM), Fluorkautschuk (FKM), Acryl-Butadien-Kautschuk (NBR), hydrierter Acryl-Butadien-Kautschuk (HNBR) oder Ethylen-Epichlorhydrin-Kautschuk (ECO) erwiesen. Diese Werkstoffe sind auch bei den in Kupplungen auftretenden höheren Temperaturen geeignet und sie sind insbesondere für den Einsatz in Nasskupplungen geeignet, da diese Werkstoffe beständig gegenüber dem in Nasskupplungen eingesetzten Getriebeöl sind.

Die poröse erste Schicht kann ein Fasermaterial umfassen. Das Fasermaterial kann aus Vliesstoff oder auch aus einem Gewebe bestehen. Aufgrund der hohen Temperaturen sind insbesondere Fasern oder Fasergemische enthaltend Glasfasern, Kohlefasern, Aramidfasern oder Polyphenylensulfidfasem denkbar. Es sind jedoch auch Fasern oder Fasergemische enthaltend Polyester, Polyamide oder weitere Kunststoffe denkbar. Derartige Fasern sind bekannt und haben sich bereits als Fasermaterial in Kupplungsbelägen bewährt. Eine aus diesen Materialien hergestellte Schicht weist eine hohe Porosität auf. Zur Verbesserung der Festigkeit können aus Vliesstoff gebildete Schichten thermisch verfestigt sein. Des Weiteren ist es denkbar, das Fasermaterial mit einem Metall zu bedampfen und so einen Abnutzungsindikator bereit zu stellen.

Ein besonderer Vorteil bei der Verwendung von Vliesstoffen ergibt sich durch deren labyrinthartige Struktur und das Übereinanderliegen vieler Faserlagen längs einer Materialdicke. Beide Eigenschaften führen nämlich zu einem guten Rückhaltevermögen für Getriebeöle. Ein weiterer Vorteil entsteht bei der Verwendung von Trocken- oder Spinnvliesstoffen, die aus relativ langen Fasern bestehen. Typische Faserlängen der Fasern eines Trockenvlieses sind größer als 30 mm. Bei einem Spinnvliesstoff sind die Fasern quasi unendlich lang. Im Gegensatz hierzu zeigen Papiere typische Faserlängen, die kleiner als 10 mm sind. Je länger die Faserlänge ist, desto geringer ist das Risiko der Loslösung einer Faser bzw. einer Kontamination.

Die poröse Schicht kann nahezu frei oder völlig frei von mineralischen Füllstoffen ausgestaltet sein. Dies reduziert abermals das Risiko einer Kontamination durch losgelöste Mineralpartikel.

Die erste Schicht kann zumindest teilweise in die zweite Schicht eingedrungen sein. Dabei wird die Dicke der ersten Schicht so gewählt, dass auch die in die zweite Schicht eingedrungene erste Schicht noch aus der zweiten Schicht herausragt. Hierbei ist insbesondere vorteilhaft, dass die erste Schicht fest mit der zweiten Schicht verbunden ist. Des Weiteren können Bindersysteme entfallen, die die Fasern oder Fasergemische festigen, da die Fasern fest in die Matrix der zweiten Schicht eingebunden sind. Wenn die erste Schicht die zweite Schicht vollständig durchdringt, erfolgt eine Faserverstärkung der zweiten Schicht, die dadurch eine höhere Stabilität erlangt. Insbesondere kann durch diese Anordnung das Verhalten gegenüber Scherkräften verbessert werden.

Die poröse erste Schicht kann aus einem elastomeren Material gebildet sein. Bei dieser Ausgestaltung ist die Reibfläche der ersten Schicht beispielsweise durch Laser-Gravieren, mechanische Bearbeitung wie Fräsen oder chemische Bearbeitung wie Ätzen bearbeitet, so dass diese eine hohe Porosität aufweist und eine hohe Reibung realisiert. Die Struktur kann auch schon bei der Formgebung durch ein Werkzeug erzielt werden. Ein weiterer Vorteil dieser Ausgestaltung liegt in der Ausbildung anisotroper bzw. fördernder Strukturen. So können beispielsweise Strukturen, welche in der späteren Anwendung im ausgekuppelten Zustand eine horizontale Ausrichtung zeigen, einen Ölspeichereffekt erhöhen. Poröse Strukturen, welche während einer Drehung ölfördernd wirken, können zu einem verbesserten Öltransport bzw. einer verbesserten Kühlwirkung beitragen.

Die erste Schicht kann eine Reibfläche aufweisen und die Reibfläche kann mit einer Struktur versehen sein. Insbesondere bei Nasskupplungen verbessert diese Struktur die Verteilung und auch den Abfluss des Schmiermediums. Die Struktur kann ebenfalls durch Laser-Gravieren, mechanische Bearbeitung wie Fräsen oder chemische Bearbeitung wie Ätzen in die Reibfläche eingebracht sein.

Vor diesem Hintergrund könnte die Struktur anisotrop ausgestaltet sein. Anisotrope Strukturen können fördernd wirken. So können beispielsweise Strukturen, welche in der späteren Anwendung im ausgekuppelten Zustand eine horizontale Ausrichtung zeigen, einen Ölspeichereffekt erhöhen. Poröse anisotrope Strukturen, welche während einer Drehung ölfördernd wirken, können zu einem verbesserten Öltransport bzw. einer verbesserten Kühlwirkung beitragen.

Die Struktur kann Nuten umfassen. Diese Nuten können kreuzweise in die Schicht eingebracht sein. Die so hergestellte Waffelstruktur weist insbesondere Vorteile betreffend den Ab- und Zufluss des Schmiermediums auf.

Die Nuten können die erste Schicht und zumindest teilweise die zweite Schicht durchdringen. Bei dieser Ausgestaltung ist die erste Schicht im Bereich der Nuten vollständig durchtrennt, so dass die Kupplungsscheibe über eine besonders große Elastizität verfügt.

Die zweite Schicht kann zwei oder mehrere Teilschichten aufweisen, die aus voneinander abweichenden elastomeren Werkstoffen gebildet sind. Die erste Teilschicht kann dabei zur Anbindung der ersten Schicht optimiert sein und die zweite Teilschicht kann zur Anbindung an die Trägerstruktur optimiert sein. Es ist auch denkbar beide Teilschichten aus elastomeren Werkstoffen mit unterschiedlichen Härten bereitzustellen. Bei dieser Ausgestaltung ist vorteilhaft, dass die erste Teilschicht vollständig von dem Material der ersten Schicht durchdrungen ist, die erste Schicht aber aufgrund der geringen Materialstärke der Teilschicht stets heraus- bzw. abragt.

Die Verwendung von zwei oder mehreren Teilschichten aus Elastomeren erlaubt die Ausführung einer zwei- oder mehrstufigen Kraft-Weg-Kurve. Hierdurch kann z. B. ein sanfteres Einkuppeln erzielt werden, wodurch ein geringerer Verschleiß des Kupplungsbelages realisiert werden kann.

Die zweite Schicht kann auf die Trägerstruktur aufvulkanisiert sein. Hierbei entfallen zusätzliche Klebstoffe. Es ist unter Umständen lediglich erforderlich, die Trägerstruktur chemisch oder mechanisch vorzubehandeln. Zur Verbesserung der Haftung kann die Trägerstruktur insbesondere aufgerauht werden.

Vorteilhaft könnte die zweite Schicht auch auf die Trägerstruktur aufgeklebt sein. Bei dieser Art der Befestigung werden die einzelnen Bestandteile der Kupplungscheibe nahezu nicht thermisch beaufschlagt und bei der Fertigung der Kupplungsscheibe geschont.

Eine Kupplung könnte vorteilhaft eine Kupplungsscheibe der hier beschriebenen Art umfassen. Der erfinderische Vorteil ergibt sich insbesondere bei einer Nasskupplung, da die eingesetzten elastomeren Werkstoffe eine hervorragende Beständigkeit gegenüber den in einer Nasskupplung eingesetzten Schmiermitteln besitzen. Des Weiteren behalten die Werkstoffe der zweiten Schicht auch nach einer langen Gebrauchsdauer ihre elastischen Eigenschaften.

Die hier beschriebene Kupplungsscheibe kann vorteilhaft in Getrieben, Wandlern oder Sperrdifferentialen verwendet werden.

### Kurzbeschreibung der Zeichnung

Einige Ausführungsbeispiele der erfindungsgemäßen Kupplungsscheibe werden nachfolgend anhand der Figuren näher erläutert. Dabei zeigen jeweils schematisch
- Fig. 1: eine Kupplungsscheibe mit erster und zweiter Schicht;
- Fig. 2: eine Kupplungsscheibe, bei der die erste Schicht die zweite Schicht vollständig durchdrungen hat;
- Fig. 3: eine Kupplungsscheibe, bei der die zweite Schicht zwei Teilschichten aufweist, und
- Fig. 4: eine Kupplungsscheibe, bei der die erste Schicht aus einem elastomeren Material besteht.

### Ausführung der Erfindung

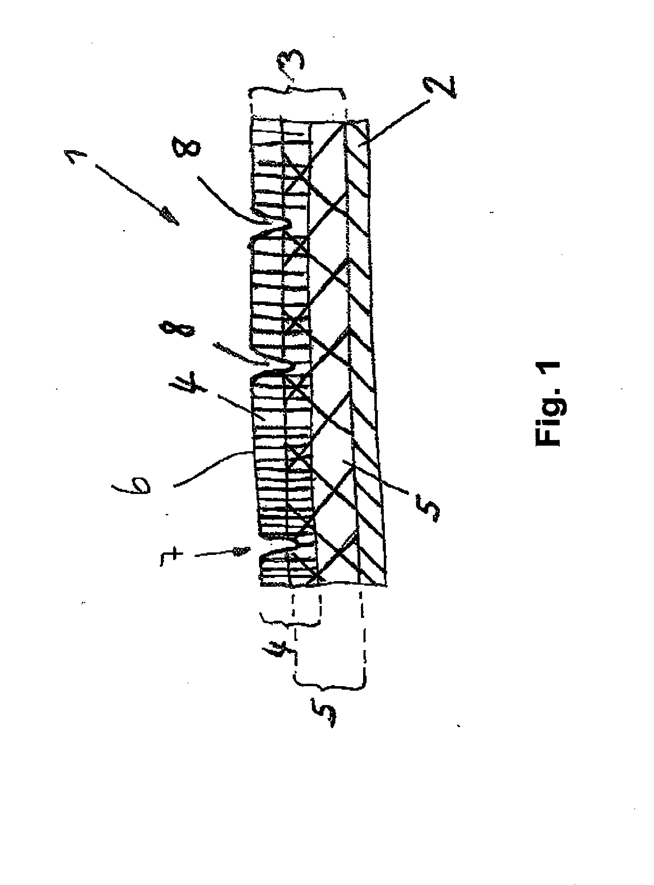

Figur 1 zeigt eine Kupplungsscheibe 1 für eine Nasskupplung eines Kraftfahrzeugs. Die Kupplungsscheibe 1 weist eine Trägerstruktur 2, bestehend aus einem metallischen Material auf. Beidseitig der Trägerstruktur 2 ist ein Kupplungsbelag 3 angeordnet und stoffschlüssig mit der Trägerstruktur 2 verbunden. Der Kupplungsbelag 3 besteht aus einer porösen ersten Schicht 4, die ein Fasermaterial enthaltend Aramidfasern umfasst. In einer weiteren Ausgestaltung umfasst die erste Schicht 4 ein Fasermaterial enthaltend Kohlefasern. Die erste Schicht 4 ist auf einer zweiten Schicht 5 angeordnet, welche wiederum aus elastomerem Material, hier Fluorkautschuk besteht, Die erste Schicht 4 mit dem Fasermaterial ist teilweise in die zweite Schicht 5 mit dem elastomeren Material eingedrungen, wodurch das Fasermaterial fest in dem Kupplungsbelag 3 gebunden ist. Der Kupplungsbelag 3 ist durch Vulkanisation des Materials der zweiten Schicht 5 stoffschlüssig mit der Trägerstruktur 2 verbunden. Zur Verbesserung der Haftung ist die Oberfläche der Trägerstruktur 2 aufgerauht. Die erste Schicht 4 weist eine Reibfläche 6 auf. Diese ist mit einer Struktur 7 versehen, die in dieser Ausgestaltung Nuten 8 umfasst. Die Nuten 8 ragen in die zweite Schicht 5 hinein.

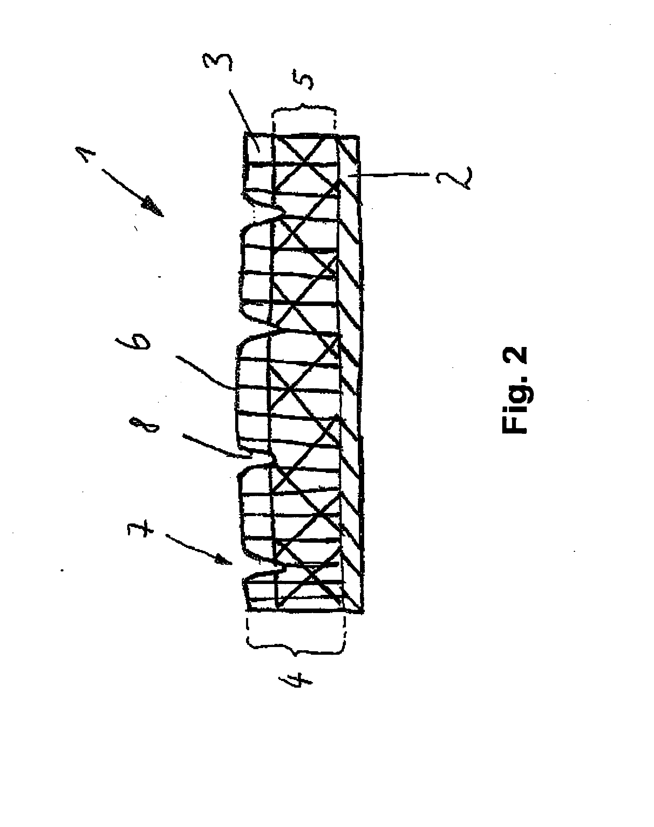

Figur 2 zeigt eine Ausgestaltung einer Kupplungsscheibe 1 gemäß Figur 1, wobei die erste Schicht 4 in dieser Ausgestaltung die zweite Schicht 5 vollständig durchdringt. Dadurch ist das elastomere Material der zweiten Schicht 5 vollständig durch Material der ersten Schicht 4 faserverstärkt. Die erste Schicht 4 weist eine Reibfläche 6 auf. Diese ist mit einer Struktur 7 versehen, die in dieser Ausgestaltung Nuten 8 umfasst. Die Nuten 8 ragen in die zweite Schicht 5 hinein.

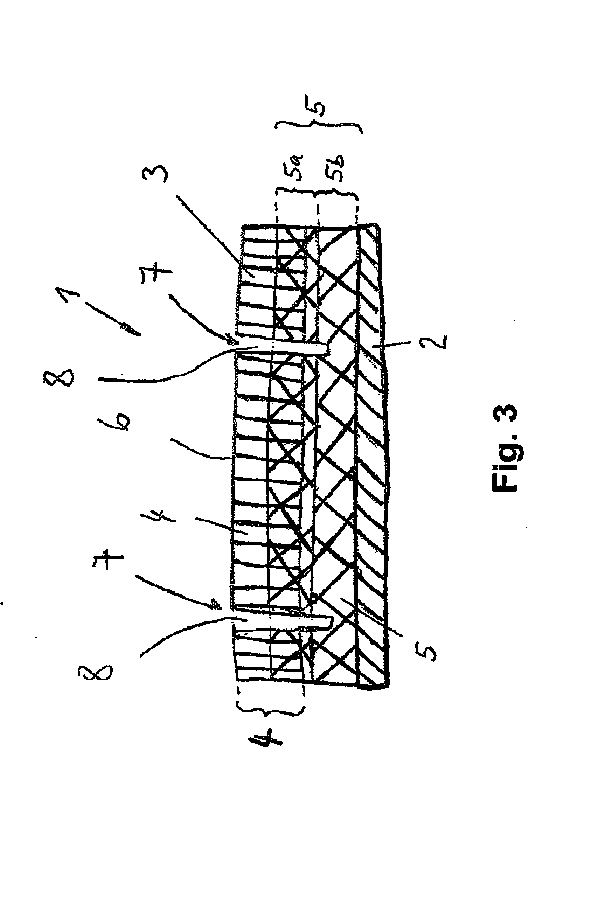

Figur 3 zeigt eine Ausgestaltung einer Kupplungsscheibe 1 gemäß Figur 1, wobei die zweite Schicht 5 zwei Teilschichten 5a, 5b aufweist, die aus voneinander abweichenden elastomeren Werkstoffen bestehen. Bei dieser Ausgestaltung weist der Werkstoff der ersten Teilschicht 5a, die von dem Material der ersten Schicht 4 durchdrungen ist, eine geringere Härte auf als der Werkstoff, aus dem die der Trägerschicht 2 zugewandte zweite Teilschicht 5b besteht. Die erste Schicht 4 weist eine Reibfläche 6 auf. Diese ist mit einer Struktur 7 versehen, die in dieser Ausgestaltung Nuten 8 umfasst. Die Nuten 8 durchdringen bzw. durchgreifen die erste Schicht 4 vollständig und die zweite Schicht 5 teilweise.

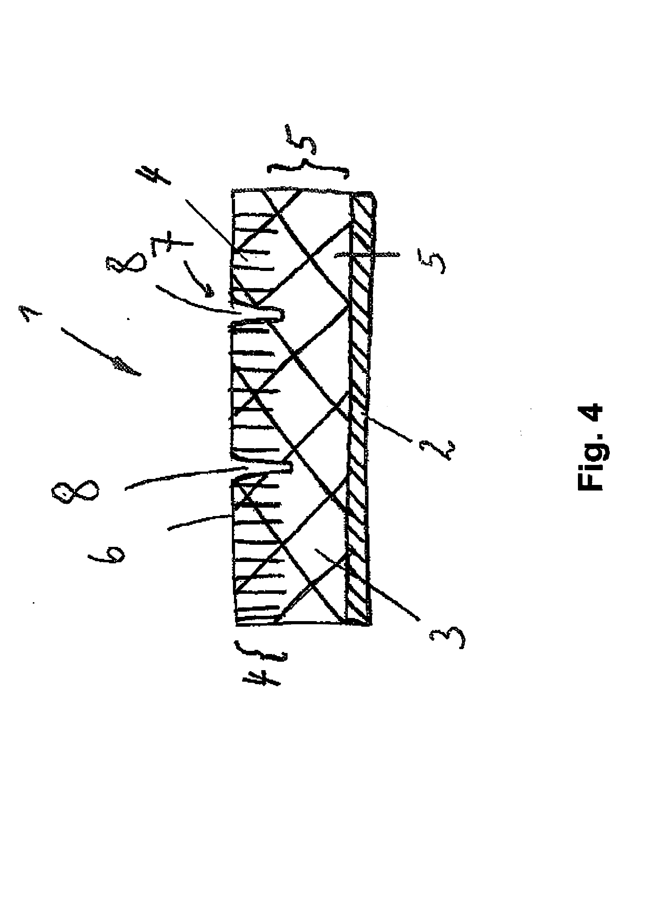

Figur 4 zeigt eine Ausgestaltung einer Kupplungsscheibe 1 gemäß Figur 1, wobei die erste Schicht 4 in dieser Ausgestaltung aus einem elastomeren Material besteht. Dabei können die erste Schicht 4 und die zweite Schicht 5 materialeinheitlich und einstückig ausgebildet sein. Auch hier ist auf der Reibfläche 6 eine Struktur 7 mit Nuten 8 ausgebildet. Die Nuten 8 durchdringen bzw. durchgreifen dabei die erste Schicht 4 vollständig.

## Patentansprüche

1. Kupplungsscheibe (1), umfassend eine Trägerstruktur (2) auf der ein Kupplungsbelag (3) angeordnet ist, wobei der Kupplungsbelag (3) zumindest eine poröse erste Schicht (4) umfasst, **dadurch gekennzeichnet, dass** die erste Schicht (4) auf zumindest einer zweiten Schicht (5), gebildet aus elastomerem Material, angeordnet ist.

2. Kupplungsscheibe nach Anspruch 1, **dadurch gekennzeichnet, dass** die poröse erste Schicht (4) ein Fasermaterial umfasst.

3. Kupplungsscheibe nach Anspruch 1 oder 2, **dadurch gekennzeichnet, dass** die erste Schicht (4) zumindest teilweise in die zweite Schicht (5) eingedrungen ist.

4. Kupplungsscheibe nach Anspruch 1 oder 3, **dadurch gekennzeichnet, dass** die poröse erste Schicht (4) aus einem elastomeren Material gebildet ist.

5. Kupplungsscheibe nach einem der Ansprüche 1 bis 4, **dadurch gekennzeichnet, dass** die erste Schicht (4) eine Reibfläche (6) aufweist und dass die Reibfläche (6) mit einer Struktur (7) versehen ist.

6. Kupplungsscheibe nach Anspruch 5, **dadurch gekennzeichnet, dass** die Struktur (7) anisotrop ausgestaltet ist.

7. Kupplungsscheibe nach Anspruch 5 oder 6, **dadurch gekennzeichnet, dass** die Struktur (7) Nuten (8) umfasst.

8. Kupplungsscheibe nach Anspruch 7, **dadurch gekennzeichnet, dass** die Nuten (8) die erste Schicht (4) und zumindest teilweise die zweite Schicht (5) durchdringen.

9. Kupplungsscheibe nach einem der Ansprüche 1 bis 8, **dadurch gekennzeichnet, dass** die zweite Schicht (5) zwei Teilschichten (5a, 5b) aufweist, die aus voneinander abweichenden elastomerem Werkstoffen gebildet sind.

10. Kupplungsscheibe nach einem der Ansprüche 1 bis 9, **dadurch gekennzeichnet, dass** die zweite Schicht (5) auf die Trägerstruktur (2) aufvulkanisiert ist.

11. Kupplungsscheibe nach einem der Ansprüche 1 bis 9, **dadurch gekennzeichnet, dass** die zweite Schicht (5) auf die Trägerstruktur (2) aufgeklebt ist.

12. Kupplung, umfassend eine Kupplungsscheibe (1) nach einem der vorherigen Ansprüche.
